# EUROPEAN PATENT APPLICATION

(11) **EP 3 501 302 A1**
(43) Date of publication of application: **26.06.2019**
(21) Application number: 17208528.4
(22) Date of filing: 19.12.2017
(51) Int. Cl.: A24D 3/02, A24C 5/32

(54) **APPARATUS FOR MANUFACTURING MULTI-SEGMENT RODS OF THE TOBACCO PROCESSING INDUSTRY**

(71) Applicant: International Tobacco Machinery Poland Sp. z o.o., 26-600 Radom (PL)
(72) Inventor: MAMERSKI, Marcin, 26-600 Radom (PL); SLOWIK, Jacek, 26-600 Radom (PL)
(74) Representative: Markieta, Jaroslaw Franciszek

(57) **Abstract**

An apparatus for manufacturing of multi-element rods of the tobacco industry comprising a feeding apparatus (5) designed to feed rod-like elements (S1, S3, S4), a transferring apparatus (3, 3A) designed to transfer the rod-like elements (S1, S3, S4) or groups (G) of the rod-like elements (S1, S3, S4) from the apparatus (5) feeding the rod-like elements (S1, S3, S4) to the forming apparatus (11), comprising a first rotational element (6, 6') provided with first lugs (16, 16') and notches (26, 26') between the lugs (16, 16'), a second rotational element (7, 7') provided with second lugs (17, 17') and notches (27, 27') between the lugs (17,17'), a third rotational element (8, 8') provided with third lugs (18,18') and notches (28, 28') between the lugs (18, 18'), used to convey the rod-like elements (S1, S3, S4), whereas the notches (26, 26', 27, 27', 28, 28') are adapted to receive and convey the individual rod-like elements (S1, S3, S4) or the groups (G) of the rod-like elements (S1, S3, S4), whereas the first rotational element (6, 6'), the second rotational element (7, 7') and the third rotational element (8, 8') are arranged and adapted to guide the rod-like elements (S1, S3, S4) successively through the first rotational element (6, 6'), the second rotational element (7, 7') and the third rotational element (8, 8'), the apparatus further comprises a forming apparatus (11) designed to form a continuous multi-element rod (CR), a cutting apparatus (13) designed to cut the continuous multi-element rod (CR) into individual multi-element rods (R). The apparatus according to the invention is characterised in that the bottom surfaces (36, 36') of the notches (26, 26') on the first rotational element (6, 6') and the bottom surfaces (38, 38') of the notches (28, 28') on the third rotational element (8, 8') are situated so that the diameter (D3) of a circle having the centre on the axis of rotation (Z) of the third rotational element (8, 8'), inscribed in the bottom surfaces (38, 38') of the notches (28, 28') on the third rotational element (8, 8') is smaller than the diameter (D1) of a circle having the centre on the axis of rotation (X) of the first rotational element (6, 6'), inscribed in the bottom surfaces (36, 36') of the notches (26, 26') on the first rotational element (6, 6').

## Description

The object of the invention is an apparatus for manufacturing of multi-element rods of the tobacco industry.

This invention relates to an apparatus for manufacturing of multi-segment rods of the tobacco industry wherein rod-like elements are transferred between conveyors along which the principally cylindrical elements of which the multi-segment rods are manufactured are axially lengthwise conveyed. In this document, the term 'rod-like elements' is to be understood as among others tobacco segments, tobacco rods, filter segments, filter rods made of one kind of material, multi-element filter rods comprising filter segments, rods containing elements for changing the articles' aroma or giving such aroma, multi-element filter rods comprising filter segments and elements changing the filtering properties of filter materials used, multi-element rods comprising both filter and non-filter segments, multi-segment articles with a reduced tobacco content as well as cigarettes with a single-segment or multi-segment filter tip stuck on. Whereas the rod-like elements may be cylindrical, may deviate from the cylindrical shape, and also may have undercuts or hollows on both front and circumferential surface.

In the tobacco industry, it is common to put rod-like elements together in continuous trains of alternately different or the same elements, whereas multi-element rods are manufactured from such trains. These may include non-filter and filter elements with different filtering properties or alternately non-filter, filter elements and tobacco rods. The continuous elements trains are wrapped with a band of a wrapping material, for example a paper wrapper, forming a continuous rod, and are subjected to further processing, whereas in the first place they are cut into the abovementioned rods with a repeatable sequence of components.

There is a demand on the part of the tobacco industry manufacturers to put the rod-like elements together without gaps between the elements or with precisely determined gaps.

A difficult and very significant problem when putting elements together without gaps is to meet the expectation that the rod-like elements are to be pushed together, generally placed next to one another, in a repeatable manner. The feeding in a repeatable manner is understood as placing the elements in such a way that the influence of accidental factors on the final position of elements in the elements train is eliminated. Undesirable effects which may be caused by accidental factors include the formation of accidental gaps between the elements or excessive squeezing of the elements and consequently the deformation of the elements, which affects the quality of finished products.

The rod-like elements trains being put together and conveyed axially lengthwise are frequently transferred between rod-like element conveying apparatuses. Rod-like element transferring apparatuses are known from the prior art. For example from the document EP 1 763 306 B1 an apparatus for transferring individual rod-like elements or groups of rod-like elements, in this case of filter segments, is known. From the created elements train a continuous rod is formed and is cut into individual rods. At the time of transferring of the elements, the gaps necessary for correct transferring of the rod-like elements among successive rotational elements in the form of wheels provided with lugs on the circumference are maintained between individual groups of elements, whereas the groups of rod-like elements or the individual rod-like elements are placed in notches between the lugs. In order to form a rod-like elements train without gaps on a forming tape behind the transferring apparatus, the transferring tape moves with a speed being smaller than the circumferential speed of the last rotational element of the transferring apparatus. In the course of transferring of the rod-like elements onto the tape, there is friction between the elements and the tape due to the speed difference. As a result of this, the rod-like elements arranged on the tape are not arranged in a repeatable manner, may be excessively squeezed or accidental gaps between the elements may occur. The speed of the transferring tape is smaller than the circumferential speed of the rotational element, so the elements delivered by the last of the transferring wheels are pushed to the previously delivered elements. The elements are transferred along the paper wrapper moving with the tape speed. The glue which is usually applied on the paper wrapper may make it difficult to move the elements and the glue may accumulate between the elements. It happens that the paper wrapper of the transferred elements is wrongly stuck, which may affect the correctness of the final position of the transferred group and the repeatability of the position of neighbouring elements from the successive groups relative to one another. The abovementioned document EP 1 763 306 B1 does not disclose a method of transferring of long rod-like elements or a method of bringing neighbouring elements or groups of elements closer to one another at the time of transferring so as to reduce shifting of the elements relative to the paper wrapper, generally relative to the wrapping material. In the case of feeding of a group of rod-like elements containing an element which is clearly longer than the other elements or in the case of feeding of individual long rod-like elements, the transferring of such groups or individual elements is realized less smoothly and there may occur greater stresses, the long elements may be subject to accidental deformations.

The problem to be solved by this invention is to develop an improved apparatus for transferring rod-like elements between conveying apparatuses on a manufacturing machine, whereas such apparatus will make it possible to deliver rod-like elements to the output conveying apparatus more smoothly, and in addition the position of the neighbouring groups of rod-like elements or individual rod-like elements will reduce the necessity of movement of the rod-like elements relative to the wrapping material.

The object of the invention is an apparatus for manufacturing of multi-element rods of the tobacco industry comprising a feeding apparatus designed to feed the rod-like elements, a transferring apparatus designed to transfer the rod-like elements or groups of the rod-like elements from the rod-like element feeding apparatus to a forming apparatus, comprising a first rotational element provided with first lugs, immobile relative to the first rotational element, and notches between the first lugs, a second rotational element provided with second lugs, immobile relative to the second rotational element, and notches between the second lugs, a third rotational element provided with third lugs, immobile relative to the third rotational element, and notches between the third lugs, used to convey the rod-like elements. The notches are adapted to receive and convey individual rod-like elements or groups of rod-like elements. The first rotational element, the second rotational element and the third rotational element are arranged and adapted to guide the rod-like elements successively through the first rotational element, the second rotational element and the third rotational element. The apparatus comprises the forming apparatus designed to form a continuous multi-element rod and a cutting apparatus designed to cut the continuous multi-element rod into individual multi-element rods. The apparatus according to the invention is characterised in that the bottom surfaces of the notches on the first rotational element and the bottom surfaces of the notches on the third rotational element are situated so that the diameter of a circle having the centre on the axis of rotation of the third rotational element, inscribed in the bottom surfaces of the notches on the third rotational element is smaller than the diameter of a circle having the centre on the axis of rotation of the first rotational element, inscribed in the bottom surfaces of the notches on the first rotational element.

Preferably, the apparatus according to the invention is characterised in that the bottom surfaces of the notches on the second rotational element and the bottom surfaces of the notches on the third rotational element are situated so that the diameter of a circle having the centre on the axis of rotation of the third rotational element, inscribed in the bottom surfaces of the notches on the third rotational element is smaller than the diameter of a circle having the centre on the axis of rotation of the second rotational element, inscribed in the bottom surfaces of the notches on the second rotational element.

The apparatus according to the invention is further characterised in that the bottom surfaces of the notches on the first rotational element and the bottom surfaces of the notches on the second rotational element are situated so that the diameter of a circle having the centre on the axis of rotation of the second rotational element, inscribed in the bottom surfaces of the notches on the second rotational element is smaller than the diameter of a circle having the centre on the axis of rotation of the first rotational element, inscribed in the bottom surfaces of the notches on the first rotational element.

Preferably, the apparatus according to the invention is characterised in that the third lugs have a thickness smaller than the thickness of the first lugs.

Preferably, the apparatus according to the invention is characterised in that the third lugs have a thickness smaller than the thickness of the second lugs.

Preferably, the apparatus according to the invention is characterised in that the second lugs have a thickness smaller than the thickness of the first lugs.

Preferably, the apparatus according to the invention is characterised in that the thickness of the third lugs constitutes less than two thirds of the thickness of the first lugs.

Preferably, the apparatus according to the invention is characterised in that the bottom surface of the notch on the first rotational element, the bottom surface of the notch on the second rotational element and the bottom surface of the notch on the third rotational element each has at least one flat area.

The object of the invention is further an apparatus for manufacturing of multi-element rods of the tobacco industry comprising a feeding apparatus designed to feed the rod-like elements, a transferring apparatus designed to transfer the rod-like elements or groups of the rod-like elements from the apparatus feeding the rod-like elements to the forming apparatus, comprising a first rotational element provided with first lugs immobile relative to the first rotational element and the notches between the first lugs, a second rotational element provided with second lugs immobile relative to the second rotational element and the notches between the second lugs, a third rotational element without lugs, used to convey the rod-like elements. The notches between the first lugs on the first rotational element and the notches between the second lugs on the second rotational element as well as the circumferential surface of the third rotational element are adapted to receive and convey individual rod-like elements or groups of rod-like elements. The first rotational element, the second rotational element and the third rotational element are arranged and adapted to guide the rod-like elements successively through the first rotational element, the second rotational element and the third rotational element. Furthermore, the apparatus comprises a forming apparatus designed to form a continuous multi-element rod, and a cutting apparatus designed to cut the continuous multi-element rod into individual multi-element rods. The apparatus according to the invention is characterised in that the bottom surfaces of the notches on the first rotational element and the bottom surfaces of the notches on the second rotational element are situated so that the diameter of a circle having the centre on the axis of rotation of the second rotational element, inscribed in the bottom surfaces of the notches on the second rotational element is smaller than the diameter of a circle having the centre on the axis of rotation of the first rotational element, inscribed in the bottom surfaces of the notches on the first rotational element.

Preferably, the apparatus according to the invention is characterised in that the bottom surfaces of the notches are situated on the second rotational element so that the diameter of the circumferential surface of the third rotational element is smaller than the diameter of a circle having the centre on the axis of rotation of the second rotational element, inscribed in the bottom surfaces of the notches on the second rotational element.

Preferably, the apparatus according to the invention is characterised in that the bottom surfaces of the notches are situated on the second rotational element so that the diameter of the circumferential surface of the third rotational element is equal to the diameter of a circle having the centre on the axis of rotation of the second rotational element, inscribed in the bottom surfaces of the notches on the second rotational element.

Preferably, the apparatus according to the invention is characterised in that the bottom surfaces of the notches are situated on the second rotational element so that the diameter of the circumferential surface of the third rotational element is greater than the diameter of a circle having the centre on the axis of rotation of the second rotational element, inscribed in the bottom surfaces of the notches on the second rotational element.

Preferably, the apparatus according to the invention is characterised in that the second lugs have a thickness smaller than the thickness of the first lugs.

Preferably, the apparatus according to the invention is characterised in that the thickness of the second lugs constitutes less than two thirds of the thickness of the first lugs.

Preferably, the apparatus according to the invention is characterised in that the bottom surface of the notch on the first rotational element and the bottom surface of the notch on the second rotational element each has at least one flat area.

An advantage of the disclosed solution is bringing groups of rod-like elements or individual rod-like elements closer to one another on the path from the feeding apparatus to the forming conveyor before placing the rod-like elements on the forming conveyor.

The use of wheels having notches adapted to the rod-like elements in the group being fed resulted in an increase in the quality of manufactured rods. One of the quality parameters is precise cutting of the elements, especially long elements, whereas the cutting must be performed in a narrow tolerance range. Due to the reduction of stresses occurring at the time of transferring of the segments onto the segments train receiving conveyor, an increase in the accuracy of rod cutting was observed.

The object of the invention is shown in preferred embodiments in a drawing in which:
Figs. 1 and 2 show exemplary rod-like elements trains;
Fig. 3 shows a fragment of a machine for manufacturing multi-segment rods;
Fig. 4 shows a first embodiment of a transferring apparatus,
Figs. 5, 6 and 7 show enlarged fragments of the apparatus of Fig. 4,
Fig. 8 shows a second embodiment of the transferring apparatus,
Fig. 9 shows a third embodiment of the transferring apparatus,
Fig. 10 shows an enlarged fragment of the apparatus of Fig. 9,
Fig. 11 shows a fourth embodiment of the transferring apparatus.

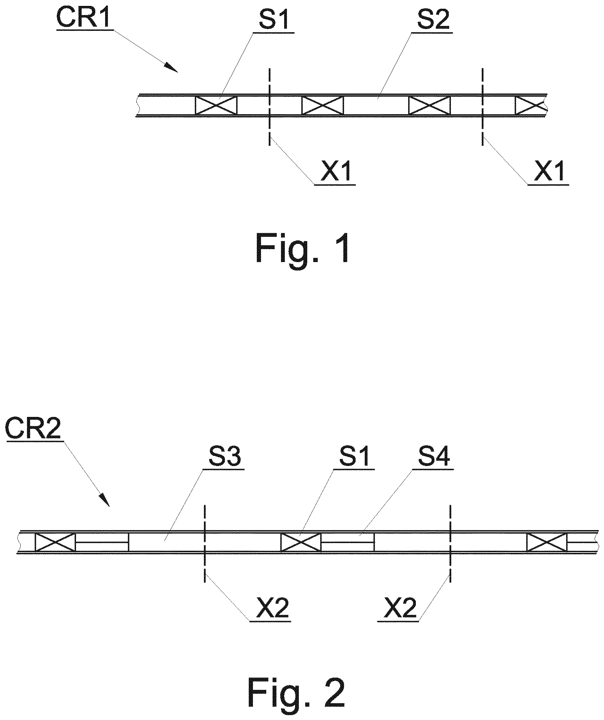

Figs. 1 and 2 show fragments of exemplary continuous multi-element rods CR1 and CR2 formed from trains of rod-like elements S1, S2, S3 and S4, respectively, prepared during the production and manufactured as a result of the operation of the apparatus according to the invention. The shown continuous rods are cut into multi-segment rods, Figs. 1 and 2 show exemplary cutting points on the continuous rods with broken lines X1 and X2. The distance between the successive lines X1, X2, respectively, shows the length of the manufactured rods. In the continuous rod CR2, the rod-like element S3 is clearly longer than the other rod-like elements. In the example of the continuous rod shown, the element S3 is approximately four times longer than the element S1, whereas elements being proportionally even longer in relation to the shortest in the group are also encountered.

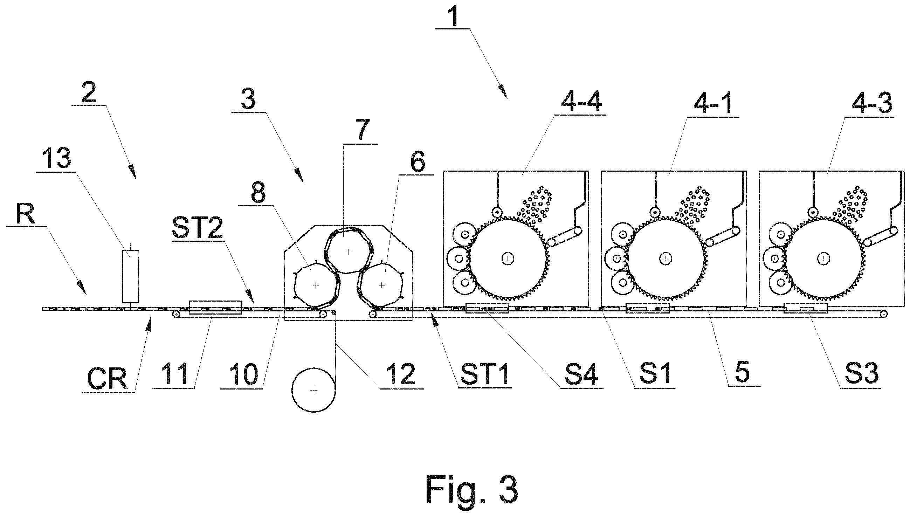

Fig. 3 shows a fragment of a machine for manufacturing multi-element filter rods. The machine has a feeding area 1 to which the filter material rods are fed, a forming area 2 in which the multi-element rods R are manufactured, and a transferring apparatus 3 which transfers the rod-like elements from the feeding area 1 to the forming area 2. The feeding area 1 comprises feeding modules 4-1,4-3 and 4-4 designed to feed the filter rods from which the rod-like elements S1, S3 and S4, respectively, such as included in the continuous multi-segment rod CR2, are manufactured. The rod-like elements S1, S3 and S4 are placed onto a feeder 5 which conveys them to the transferring apparatus 3, whereas the stream of the rod-like elements is denoted as ST1. The feeding area 1 may be replaced by any other feeding apparatus adapted to feed the rod-like elements in a stream ST1 axially one after another. The transferring apparatus 3 transfers the rod-like elements S1, S3, S4 delivered in the stream ST1 to the forming area 2. The transferring apparatus 3 transfers the rod-like elements S1, S3, S4 in groups G, whereas the groups G move within the transferring apparatus 3 at certain distances to one another, i.e. they do not touch one another. The transferring apparatus 3 is provided with three wheels 6, 7, 8, whereas the groups G successively pass through the wheels 6, 7, 8 and are placed onto a forming conveyor 10 belonging to the forming apparatus 11, whereas a continuous wrapping material 12 is theretofore placed onto the forming conveyor, and the stream ST2 of the rod-like elements S1, S3, S4 is placed onto this continuous wrapping material 12. The groups G in the stream ST2 may have gaps between the successive groups or may be conveyed without gaps so that the rod-like elements S1, S3, S4 keep contact with one another. The train ST2 of the rod-like elements S1, S3, S4 moving on the forming conveyor 10 is wrapped in the wrapping material 12 by means of the forming apparatus 11. The manufactured continuous multi-element rod CR moves further and is cut by means of a cutting head 13 into individual multi-element rods R.

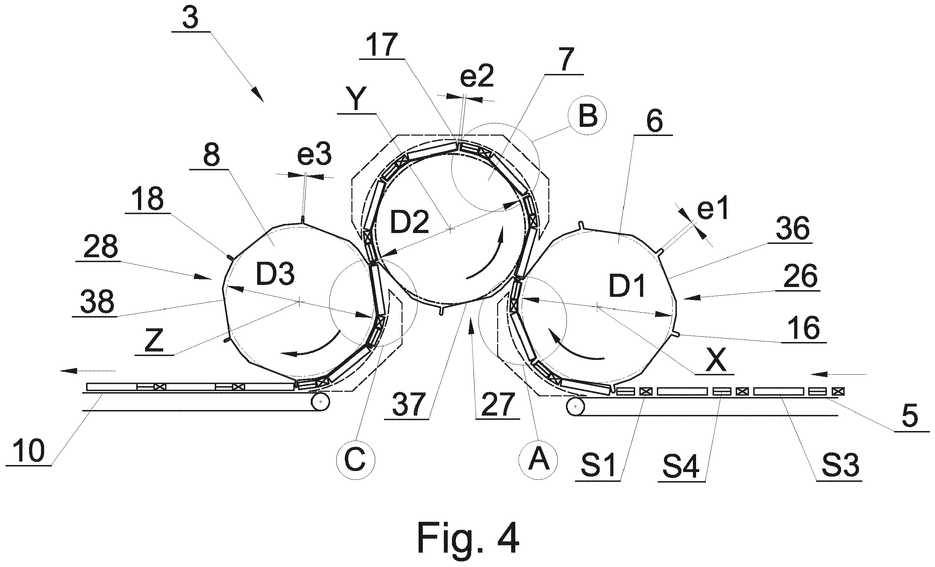

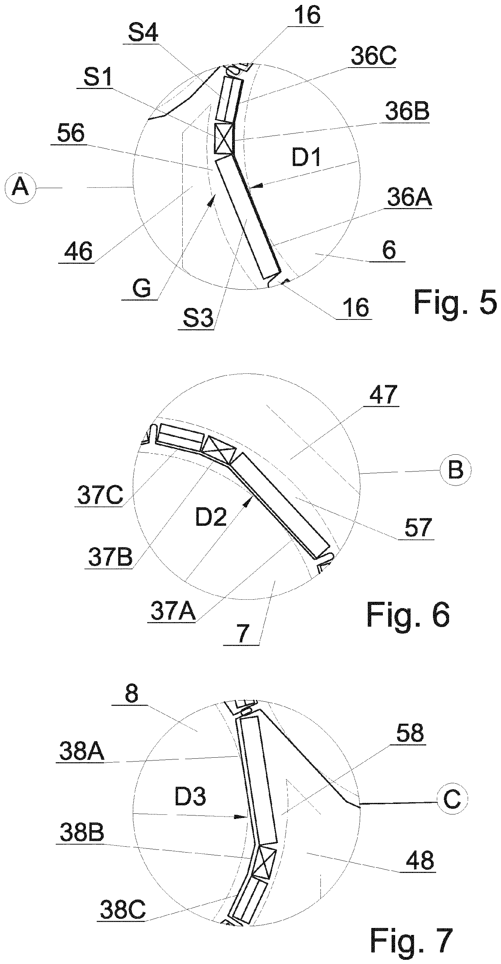

As shown in Fig. 4, the rod-like elements S1, S3, S4 are transferred from the feeder 5 onto the first wheel 6 having the axis of rotation X. Then the rod-like elements S1, S3, S4 are transferred from the wheel 6 onto the wheel 7 having the axis of rotation Y and further from a rotational element 7 onto the wheel 8 having the axis of rotation Z, and from this rotational element 8 they are transferred onto the forming conveyor 10. The rod-like elements S1, S3, S4 are received on the wheel 6 and conveyed on the wheels 6, 7, 8 in the groups G, whereas the groups G are formed on the wheel 6 in notches 26 between lugs 16, the lugs 16 are also visible in the enlarged fragment A of Fig. 4 shown in Fig. 5. The elements S1, S3, S4, as the group G, are transferred onto the wheel 7 and conveyed in the notches 27 between the lugs 17, while on the wheel 8 they are conveyed in the notches 28 between the lugs 18. The wheels 6, 7, 8 may be replaced with other rotational elements on whose circumferential surface the lugs are disposed, and between which the notches designed to receive the rod-like elements are formed. For example the rotational elements may have the form of drums with horizontal axes or inclined axes.

The shape of the bottom surface 36 of the notch 26 on the wheel 6 is adapted to the individual rod-like elements S1, S3, S4. The fragment 36A of the bottom surface 36 (Fig. 5) is adapted with its length to the length of the rod-like element S3, the fragment 36A is flat, whereas in the drawing this flat area is visible as a straight section. The fragment 36B of the bottom surface 36 is adapted with its length to the length of the rod-like element S1, the fragment 36B is flat, in the drawing this flat area is visible as a straight section, whereas for such short rod-like element S1, the fragment 36B may be designed as a cylindrical sector, in the drawing this cylindrical area would be visible as a circular section. The fragment 36C of the bottom surface 36 is adapted with its length to the length of the rod-like element S4, the fragment 36C is flat, and in the drawing this flat area is visible as a straight section. Similarly, the bottom surfaces 37 of the notches 27 have fragments 37A, 37B, 37C (enlargement B in Fig. 6), and the bottom surfaces 38 of the notches 28 have fragments 38A, 38B, 38C (enlargement C in Fig.7) similarly adapted to the rod-like elements S1, S3, S4 as in the case of the first wheel 6.

In Fig. 4, the circles (shown with a broken line) with the diameters D1, D2, D3 are inscribed in the bottom surfaces 36, 37, 38 of the notches 26, 27, 28, these circles are also partly visible in the enlargements A, B and C. The circle with the diameter of D1 on the first wheel 6 is tangential to those of the fragments 36A, 36B and 36C which lie closest to the axis of rotation X, in the embodiment shown the circle with the diameter D1 is tangential to the fragments 36A, whereas the centre of this circle lies on the axis of rotation X. The circle with the diameter D1 may be tangential to all fragments 36A, 36B and 36C. The circle with the diameter D2 on the second wheel 7 is tangential to those of the fragments 37A, 37B and 37C which lie closest to the axis of rotation Y, in the embodiment shown the circle with the diameter D2 is tangential to the fragments 37A, whereas the centre of this circle lies on the axis of rotation Y. The circle with the diameter D2 may be tangential to all fragments 37A, 37B and 37C. The circle with the diameter D3 on the third wheel 8 is tangential to those of the fragments 38A, 38B and 38C which lie closest to the axis of rotation Z, the circle may be tangential to all fragments 38A, 38B and 38C. According to the invention, the diameter D3 of the circle inscribed in the bottom surfaces 38 on the third wheel 8 is smaller than the diameter D1 of the circle inscribed in the bottom surfaces 36 on the first wheel 6, while the diameter D2 of the circle inscribed in the bottom surfaces 37 on the second wheel 7 may be smaller than the diameter D1 of the circle inscribed in the bottom surfaces 36 on the first wheel 6 and greater than the diameter D3 of the circle inscribed in the bottom surfaces 38 on the third wheel 8. The transferring apparatus may be designed so that the diameters D3 and D2 are equal, and the diameter D1 is greater than the diameters D3 and D2. The transferring apparatus may be designed so that the diameters D1 and D2 are equal, and the diameter D3 is smaller than the diameters D1 and D2. The notches 16, 17 and 18 have similar or the same lengths, the transferring apparatus may be designed so that the diameters D3, D2, D1 are uniformly smaller and smaller on successive wheels, i.e. the difference between the diameters D1 and D2 is the same as the difference between the diameters D2 and D3, then the effect of uniform approaching of neighbouring groups G of the rod-like elements S1, S3, S4 is achieved. On the first wheel 6, the neighbouring groups G are situated at a distance from one another equal to the thickness e1 of the lugs 16, on the second wheel the neighbouring groups G are situated at a distance from one another equal to the thickness e2 of the lugs 17, and on the third wheel 8 the neighbouring groups G are situated at a distance from one another equal to the thickness e3 of the lugs 18.

The reduction of distance between the groups G takes place when transferring the groups between the wheel 6 and the wheel 7, and when transferring the groups between the wheel 7 and the wheel 8.

The rod-like elements S1, S3, S4 move along a path composed of three arcs and are guided by guides 46, 47 and 48 which, together with the bottom surfaces 36, 37, 38 of the notches 26, 27, 28, form channels 56, 57, 58 for the rod-like elements S1, S3, S4. The transferring apparatus is further provided with not shown guides being parallel to the drawing plane and situated before and behind the surface of the wheels 6, 7 and 8.

In order to obtain the stream ST2 in a configuration in which the rod-like elements remain in contact with the neighbouring elements it is necessary that the circumferential speed of the third rotational element 8 is greater than the movement speed of the forming conveyor 10. Then, in the process of placing of the rod-like elements S1, S3, S4 conveyed in the groups G, the final pushing together of the groups G will take place in order to eliminate the gaps between these groups.

In the first embodiment, the groups G are pushed together in two stages when transferring from the first wheel 6 to the second wheel 7 and from the second wheel 7 to the third wheel 8, and at a third stage when transferring onto the forming conveyor 10.

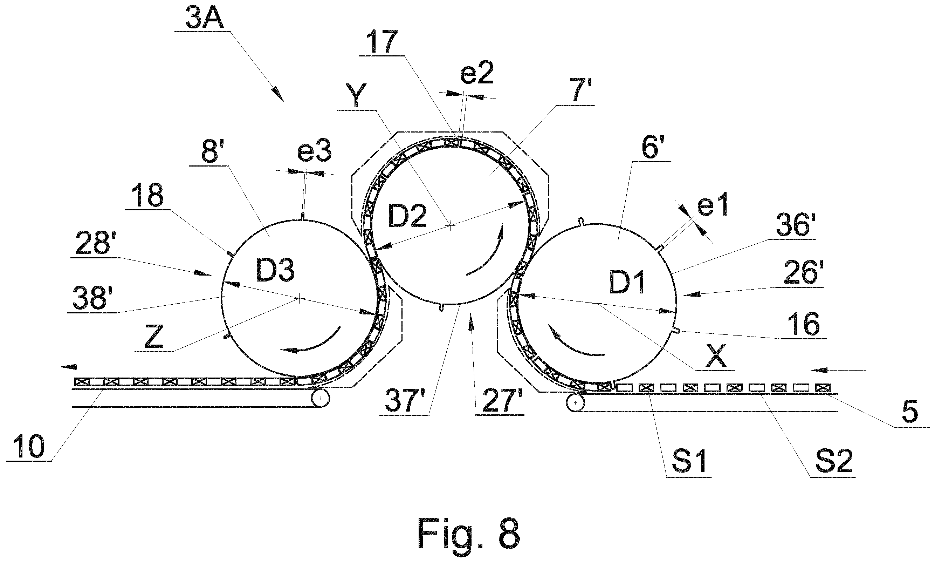

In the case of transferring of short rod-like elements the bottom surfaces of the notches may be cylindrical sectors, whereas all cylindrical sectors are coaxial. Fig. 8 shows the second embodiment wherein all wheels 6', 7', 8' of the transferring apparatus 3A have lugs 16', 17', 18' and notches 26', 27', 28' having cylindrical bottom surfaces 36', 37', 38', respectively. The diameter D1 of the circle inscribed in the bottom surfaces 36' of the notches 26' is equal to the diameter of the cylindrical surface of the bottom surfaces 36', whereas the centre of the circle lies on the axis of rotation X. The diameter D2 of the circle inscribed in the bottom surfaces 37' of the notches 27' is equal to the diameter of the cylindrical surface of the bottom surfaces 37', whereas the centre of the circle lies on the axis of rotation Y. The diameter D3 of the circle inscribed in the bottom surfaces 38' of the notches 28' is equal to the diameter of the cylindrical surface of the bottom surfaces 38', whereas the centre of the circle lies on the axis of rotation Z. Similarly to the first embodiment, the diameter D3 is smaller than the diameter D1, whereas the diameter D2 may be greater than the diameter D3 and smaller than the diameter D1. Similar to the first embodiment, the transferring apparatus may be designed so that the diameters D3 and D2 are equal, and the diameter D1 is greater than the diameters D3 and D2. The transferring apparatus may be designed so that the diameters D1 and D2 are equal, and the diameter D3 is smaller than the diameters D1 and D2.

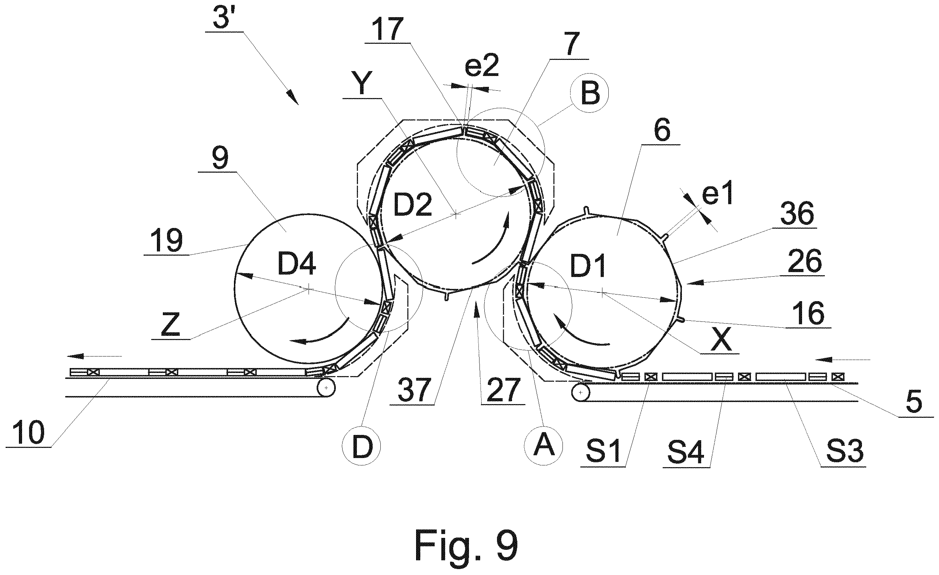

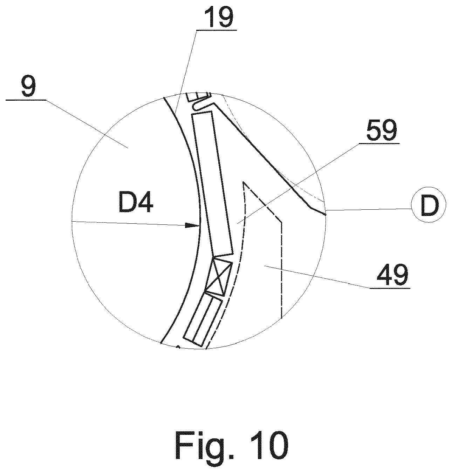

Fig. 9 shows the third embodiment of the transferring apparatus 3' wherein the first wheel 6 and the second wheel 7 are the same as described in the first embodiment, while the third wheel 9 is a wheel without lugs. The enlarged fragments A and B are the same as for the first embodiment. The enlarged fragment D is shown in Fig. 10. The circle with the diameter D1 on the first wheel 6 and the circle with the diameter D2 on the wheel 7 are defined as described in the first embodiment, whereas the circle diameter D2 is smaller than the circle diameter D1.

The use of the third wheel without lugs gives advantageous effects related to the reduction of stresses occurring between successive rod-like elements moving in groups yet on the circumferential surface 19 of the wheel 9. A decrease in speed of the successive rod-like elements resulting in the reduction of stresses between the contacting rod-like elements was observed. The deceleration effect may also be achieved by using a wheel with the diameter D4 smaller than the diameter D2. It is possible to use the wheel 9 with the circumferential diameter D4 equal to the diameter D2 or greater than the diameter D2.

The rod-like elements S1, S3, S4 move on a path composed of three arcs and are guided by the guides 46, 47 and 49 which together with the bottom surfaces 36, 37 of the notches 26, 27 and the circumferential surface 19 form the channels 56, 57, 59 for the rod-like elements S1, S3, S4. The transferring apparatus 3' is further provided with not shown guides being parallel to the drawing plane and situated before and behind the surface of the wheels 6, 7 and 9.

In the second embodiment, the groups G are pushed together in two stages, whereas the first stage takes place at the junction between the first wheel 6 and the second wheel 7. The second stage takes place from the moment of passing of the group G from the second wheel 7 to the channel 59 until the moment of passing onto the forming conveyor 10.

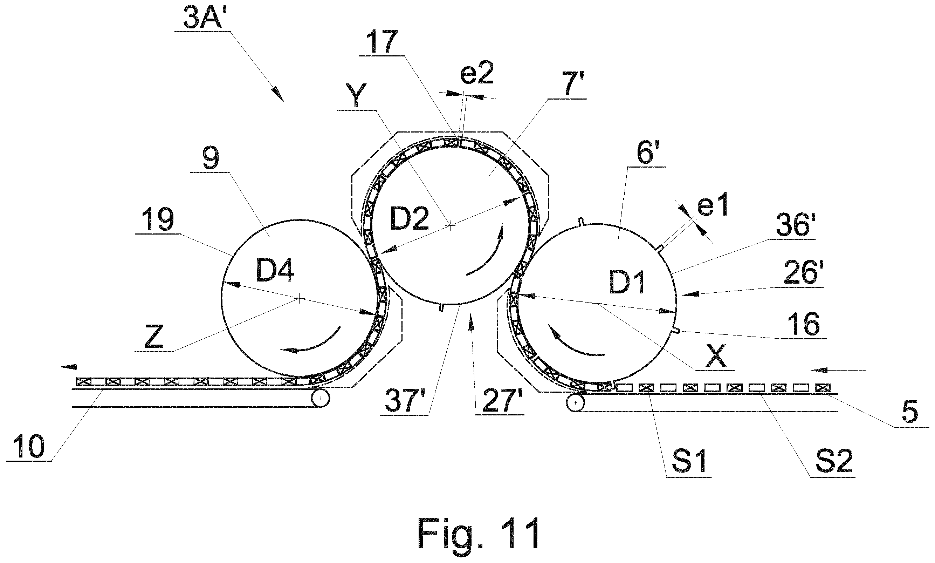

In the case of transferring of short rod-like elements, the bottom surfaces also of the first and second notches may be cylindrical sectors, whereas all cylindrical sectors of each wheel are coaxial. Fig. 11 shows the fourth embodiment wherein the wheels 6', 7' of the transferring apparatus 3A' have the lugs 16', 17' and the notches 26', 27' having cylindrical bottom surfaces 36', 37', respectively, while the third wheel 9 is a wheel without lugs. The diameter D1 of the circle inscribed in the bottom surfaces 36' of the notches 26' is equal to the diameter of the cylindrical surfaces of the bottom surfaces 36', while the centre of the inscribed circle lies on the axis of rotation X. The diameter D2 of the circle inscribed in the bottom surfaces 37' of the notches 27' is equal to the diameter of the cylindrical surface of the bottom surfaces 37', whereas the centre of the inscribed circle lies on the axis of rotation Y. Similar to the third embodiment, the diameter D4 is smaller than the diameter D1, whereas the diameter D2 may be greater than the diameter D4 and smaller than the diameter D1. Like in the first embodiment, the transferring apparatus may be designed so that the diameters D4 and D2 are equal, and the diameter D1 is greater than the diameters D4 and D2. The transferring apparatus may be designed so that the diameters D1 and D2 are equal, and the diameter D4 is smaller than the diameters D1 and D2.

## Claims

1. Apparatus for manufacturing of multi-element rods of the tobacco industry comprising
a feeding apparatus (5) designed to feed rod-like elements (S1, S3, S4),
a transferring apparatus (3, 3A) designed to transfer the rod-like elements (S1, S3, S4) or groups (G) of the rod-like elements (S1, S3, S4) from the apparatus (5) feeding the rod-like elements (S1, S3, S4) to a forming apparatus (11), comprising
a first rotational element (6, 6') provided with first lugs (16, 16') immobile relative to the first rotational element (6, 6') and notches (26, 26') between the first lugs (16, 16'),
a second rotational element (7, 7') provided with second lugs (17, 17') immobile relative to the second rotational element (7, 7') and notches (27, 27') between the second lugs (17,17'),
a third rotational element (8, 8') provided with third lugs (18,18') immobile relative to the third rotational element (8, 8') and notches (28, 28') between the third lugs (18,18'),
used to convey the rod-like elements (S1, S3, S4), whereas the notches (26, 26', 27, 27', 28, 28') are adapted to receive and convey the individual rod-like elements (S1, S3, S4) or the groups (G) of the rod-like elements (S1, S3, S4), whereas the first rotational element (6, 6'), the second rotational element (7, 7') and the third rotational element (8, 8') are arranged and adapted to guide the rod-like elements (S1, S3, S4) successively through the first rotational element (6, 6'), the second rotational element (7, 7') and the third rotational element (8, 8'),
the apparatus comprises the forming apparatus (11) designed to form a continuous multi-element rod (CR), a cutting apparatus (13) designed to cut the continuous multi-element rod (CR) into individual multi-element rods (R),
**characterised in that**
the bottom surfaces (36, 36') of the notches (26, 26') on the first rotational element (6, 6') and the bottom surfaces (38, 38') of the notches (28,28') on the third rotational element (8, 8') are situated so that the diameter (D3) of a circle having the centre on the axis of rotation (Z) of the third rotational element (8, 8'), inscribed in the bottom surfaces (38, 38') of the notches (28, 28') on the third rotational element (8, 8') is smaller than the diameter (D1) of a circle having the centre on the axis of rotation (X) of the first rotational element (6, 6'), inscribed in the bottom surfaces (36, 36') of the notches (26, 26') on the first rotational element (6, 6').

2. Apparatus as in claim 1 **characterised in that** the bottom surfaces (37, 37') of the notches (27, 27') on the second rotational element (7, 7') and the bottom surfaces (38, 38') of the notches (28, 28') on the third rotational element (8, 8') are situated so that the diameter (D3) of a circle having the centre on the axis of rotation (Z) of the third rotational element (8, 8'), inscribed in the bottom surfaces (38, 38') of the notches (28, 28') on the third rotational element (8, 8') is smaller than the diameter (D2) of a circle having the centre on the axis of rotation (Y) of the second rotational element (7, 7'), inscribed in the bottom surfaces (37, 37') of the notches (27, 27') on the second rotational element (7, 7').

3. Apparatus as in claim 1 or 2 **characterised in that** the bottom surfaces (36, 36') of the notches (26, 26') on the first rotational element (6, 6') and the bottom surfaces (37, 37') of the notches (27, 27') on the second rotational element (7, 7') are situated so that the diameter (D2) of a circle having the centre on the axis of rotation (Y) of the second rotational element (7, 7'), inscribed in the bottom surfaces (37, 37') of the notches (27, 27') on the second rotational element (7, 7') is smaller than the diameter (D1) of a circle having the centre on the axis of rotation (X) of the first rotational element (6, 6'), inscribed in the bottom surfaces (36, 36') of the notches (26, 26') on the first rotational element (6, 6').

4. Apparatus as in any of the claims 1 to 3 **characterised in that** the third lugs (18,18') have a thickness (e3) smaller than the thickness (e1) of the first lugs (16, 16').

5. Apparatus as in any of the claims 1 to 4 **characterised in that** the third lugs (18,18') have a thickness (e3) smaller than the thickness (e2) of the second lugs (17, 17').

6. Apparatus as in any of the claims 1 to 5 **characterised in that** the second lugs (17, 17') have a thickness (e2) smaller than the thickness (e1) of the first lugs (16, 16').

7. Apparatus as in claim 4 **characterised in that** the thickness (e3) of the third lugs (18, 18') constitutes less than two thirds of the thickness (e1) of the first lugs (16, 16').

8. Apparatus as in any of the claims 1 to 7 **characterised in that** bottom surface (36, 36') of the notch (26,26') on the first rotational element (6, 6'), the bottom surface (37, 37') of the notch (27, 27') on the second rotational element (7, 7') and the bottom surface (38, 38') of the notch (28, 28') on the third rotational element (8, 8') each has at least one flat area.

9. Apparatus for manufacturing of multi-element rods of the tobacco industry comprising
a feeding apparatus (5) designed to feed rod-like elements (S1, S3, S4),
a transferring apparatus (3', 3A') designed to transfer the rod-like elements (S1, S3, S4) or groups (G) of the rod-like elements (S1, S3, S4) from the apparatus (5) feeding the rod-like elements (S1, S3, S4) to a forming apparatus (11), comprising
a first rotational element (6, 6') provided with first lugs (16, 16') immobile relative to the first rotational element (6, 6') and notches (26, 26') between the first lugs (16, 16'),
a second rotational element (7, 7') provided with second lugs (17, 17') immobile relative to the second rotational element (7, 7') and notches (27, 27') between the second lugs (17, 17'),
a third rotational element (9) without lugs,
used to convey the rod-like elements (S1, S3, S4), whereas the notches (26, 26') between the lugs (16, 16') on the first rotational element (6, 6') and the notches (27, 27') between the lugs (17, 17') on the second rotational element (7, 7') as well as the circumferential surface (19) of the third rotational element (9) are adapted to receive and convey the individual rod-like elements (S1, S3, S4) or the groups (G) of the rod-like elements (S1, S3, S4), whereas
the first rotational element (6, 6'), the second rotational element (7, 7') and the third rotational element (9) are arranged and adapted to guide the rod-like elements (S1, S3, S4) successively through the first rotational element (6, 6'), the second rotational element (7, 7') and the third rotational element (9),
the apparatus comprises the forming apparatus (11) designed to form a continuous multi-element rod (CR), a cutting apparatus (13) designed to cut the continuous multi-element rod (CR) into individual multi-element rods (R),
**characterised in that**
the bottom surfaces (36, 36') of the notches (26, 26') on the first rotational element (6, 6') and the bottom surfaces (37, 37') of the notches (27, 27') on the second rotational element (7, 7') are situated so that the diameter (D2) of a circle having the centre on the axis of rotation (Y) of the second rotational element (7, 7'), inscribed in the bottom surfaces (37, 37') of the notches (27, 27') on the second rotational element (7, 7') is smaller than the diameter (D1) of a circle having the centre on the axis of rotation (X) of the first rotational element (6, 6'), inscribed in the bottom surfaces (36, 36') of the notches (26, 26') on the first rotational element (6, 6').

10. Apparatus as in claim 9 **characterised in that** the bottom surfaces (37, 37') of the notches (27, 27') are situated on the second rotational element (7, 7') so that the diameter (D4) of the circumferential surface (19) of the third rotational element (9) is smaller than the diameter (D2) of a circle having the centre on the axis of rotation (Y) of the second rotational element (7,7'), inscribed in the bottom surfaces (37, 37') of the notches (27, 27') on the second rotational element (7, 7').

11. Apparatus as in claim 9 **characterised in that** the bottom surfaces (37, 37') of the notches (27, 27') are situated on the second rotational element (7,7') so that the diameter (D4) of the circumferential surface (19) of the third rotational element (9) is equal to the diameter (D2) of a circle having the centre on the axis of rotation (Y) of the second rotational element (7, 7'), inscribed in the bottom surfaces (37, 37') of the notches (27, 27') on the second rotational element (7, 7').

12. Apparatus as in claim 9 **characterised in that** the bottom surfaces (37, 37') of the notches (27, 27') are situated on the second rotational element (7,7') so that the diameter (D4) of the circumferential surface (19) of the third rotational element (9) is greater than the diameter (D2) of a circle having the centre on the axis of rotation (Y) of the second rotational element (7,7'), inscribed in the bottom surfaces (37, 37') of the notches (27, 27') on the second rotational element (7, 7').

13. Apparatus as in any of the claims 9 to 12 **characterised in that** the second lugs (17, 17') have a thickness (e2) smaller than the thickness (e1) of the first lugs (16, 16').

14. Apparatus as in claim 13 **characterised in that** the thickness (e2) of the second lugs (17, 17') constitutes less than two thirds of the thickness (e1) of the first lugs (16, 16').

15. Apparatus as in any of the claims 9 to 14 **characterised in that** the bottom surface (36, 36') of the notch (26, 26') on the first rotational element (6, 6') and the bottom surface (37, 37') of the notch (27,27') on the second rotational element (7, 7') each has at least one flat area.
